# EUROPÄISCHE PATENTSCHRIFT

(11) **EP 4 158 712 B1**
(45) Veröffentlichungstag und Bekanntmachung des Hinweises auf die Patenterteilung: **24.04.2024**
(21) Anmeldenummer: 21726107.2
(22) Anmeldetag: 17.05.2021
(51) Int. Cl.: H01M 10/052, H01M 10/0583, H01M 10/0587, H01M 50/107, H01M 50/559, H01M 4/04, H01M 10/04

(54) **LITHIUM-IONEN-ZELLE MIT HOHER SPEZIFISCHER ENERGIEDICHTE**
HIGH ENERGY DENSITY LITHIUM ION CELL
ÉLÉMENT LITHIUM-ION À HAUTE DENSITÉ ÉNERGÉTIQUE

(30) Priorität: 29.05.2020 EP 20177371
(43) Veröffentlichungstag der Anmeldung: 05.04.2023
(73) Patentinhaber: VARTA Microbattery GmbH, 73479 Ellwangen Jagst (DE)
(72) Erfinder: PYTLIK, Edward, 73479 Ellwangen (DE); GOTTSCHALK, Michael, 73433 Aalen (DE); ENSLING, David, 73479 Ellwangen (DE); ELMER, Martin, 73479 Ellwangen (DE)
(74) Vertreter: Ostertag & Partner Patentanwälte mbB
(86) Internationale Anmeldenummer: PCT/EP2021/062990
(87) Internationale Veröffentlichungsnummer: WO 2021/239490

(56) Entgegenhaltungen:
- WO-A1-2005/109551
- DE-A1- 10 031 453
- DE-C2- 10 031 453

## Beschreibung

Die nachstehend beschriebene Erfindung betrifft eine Lithium-Ionen-Zelle, die einen bandförmigen Elektroden-Separator-Verbund in Form eines Wickels umfasst.

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten sekundären Lithium-Ionen-Zellen basieren auf dem Einsatz von Lithium, welches in Ionenform zwischen den Elektroden der Zelle hin und her wandern kann. Die Lithium-lonen-Zellen zeichnen sich dabei durch eine vergleichsweise hohe Energiedichte aus. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (Li-CoO₂), Lithiummanganoxid (LiMn₂O₄), Lithiumtitanat (Li₄Ti₅O₁₂) oder Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der mit einem Aktivmaterial beschichtet ist. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden einen Elektrodenbinder (z. B. Polyvinylidenfluorid (PVDF) oder ein anderes Polymer, beispielsweise Carboxymethylzellulose) umfassen. Dieser gewährleistet die mechanische Stabilität der Elektroden und häufig auch die Haftung des Aktivmaterials auf den Stromkollektoren. Weiterhin können die Elektroden leitfähigkeitsverbessernde Additive und andere Zusätze enthalten.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Meist werden die Elektroden und Separatoren hierbei durch Lamination oder durch Verklebung miteinander verbunden. Die grundsätzliche Funktionsfähigkeit der Zelle kann dann durch Tränkung des Verbunds mit dem Elektrolyten hergestellt werden.

In vielen Ausführungsformen ist der Verbundkörper eben ausgebildet sein, so dass mehrere Verbundkörper flach aufeinander gestapelt werden können. Sehr häufig wird der Verbundkörper aber in Form eines Wickels gebildet oder zu einem Wickel verarbeitet.

In der Regel umfasst der Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden. Solche Zellen sind beispielsweise in der WO 2017/215900 A1 beschrieben.

Aus der DE 10031453 A1 sind Zellen bekannt, bei denen die Ränder von Stromkollektoren unmittelbar über einen metallischen Kontaktstreifen kontaktiert werden.

In der WO 2005/109551 A1 ist ein elektrochemisches Energiespeicherelement mit einem Elektrodenwickel beschrieben, bei dem zwischen den Längsrändern von Stromkollektoren sogenannte "guidewires" angeordnet werden. Gemeinsam mit den Längsrändern der Stromkollektoren bilden die metallischen "guidewires" sogenannte "endcaps", die einer Anbindung unmittelbar an das Gehäuse des Energiespeicherelements zugänglich sind. Zur Stabilisierung der "endcaps" können die Längsränder und die "guidewires" miteinander verschweißt werden. Mit dem Gehäuse können die "endcaps" und damit auch die Ränder der Stromkollektoren - durch eine Verschweißung verbunden werden.

Häufig sind Zellen für die genannten Anwendungen als zylindrische Rundzellen ausgebildet, beispielsweise mit dem Formfaktor 21 × 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter Lithium-Ionen-Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermo-mechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

Der vorliegenden Erfindung lag die Aufgabe zugrunde, Lithium-Ionen-Zellen bereitzustellen, die sich durch eine gegenüber dem Stand der Technik verbesserte Energiedichte auszeichnen und die gleichzeitig hervorragende Charakteristiken bezüglich ihres Innenwiderstands und ihrer passiven Entwärmungsfähigkeiten besitzen.

Diese Aufgabe wird durch die Lithium-Ionen-Zelle mit den Merkmalen des Anspruchs 1 gelöst. Bevorzugte Ausgestaltungen dieser Zelle ergeben sich aus den abhängigen Ansprüchen.

Die erfindungsgemäße Lithium-Ionen-Zelle zeichnet sich stets durch die folgenden Merkmale a. bis i. aus:
a. Die Zelle umfasst einen bandförmigen Elektroden-Separator-Verbund mit der Sequenz Anode / Separator / Kathode.
b. Die Anode umfasst als Anodenstromkollektor eine bandförmige Metallfolie mit einer Dicke im Bereich von 4 µm bis 30 µm sowie mit einem ersten und einem zweiten Längsrand und zwei Endstücken.
c. Der Anodenstromkollektor weist einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist, auf.
d. Die Kathode umfasst als Kathodenstromkollektor eine bandförmige Metallfolie mit einer Dicke im Bereich von 4 µm bis 30 µm sowie mit einem ersten und einem zweiten Längsrand und zwei Endstücken.
e. Der Kathodenstromkollektor weist einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist, auf.
f. Der Elektroden-Separator-Verbund liegt in Form eines Wickels mit zwei endständigen Stirnseiten vor.
g. Die Anode und die Kathode sind derart ausgebildet und/oder innerhalb des Elektroden-Separator-Verbunds derart zueinander angeordnet, dass der erste Längsrand des Anodenstromkollektors aus einer der endständigen Stirnseiten und der erste Längsrand des Kathodenstromkollektors aus der anderen der endständigen Stirnseiten austritt.
h. Die Zelle weist ein metallisches Kontaktblechteil auf, das mit einem der ersten Längsränder in unmittelbarem Kontakt steht.
i. Das Kontaktblechteil ist mit diesem Längsrand durch Verschweißung verbunden.

Die Stromkollektoren dienen dazu, im Elektrodenmaterial enthaltene elektrochemisch aktive Komponenten möglichst großflächig elektrisch zu kontaktieren. Als Metall für den Anodenstromkollektor eignen sich beispielsweise Kupfer oder Nickel oder auch andere elektrisch leitfähige Materialien, insbesondere Kupfer- und Nickellegierungen oder mit Nickel beschichtete Metalle. Auch Edelstahlfolien kommen grundsätzlich in Frage. Als Metall für den Kathodenstromkollektor eignen sich beispielsweise Aluminium oder auch andere elektrisch leitfähige Materialien, insbesondere Aluminiumlegierungen.

Die Stromkollektoren sind bevorzugt beidseitig mit dem jeweiligen Elektrodenmaterial beladen.

In den freien Randstreifen ist das Metall des jeweiligen Stromkollektors frei von dem jeweiligen Elektrodenmaterial. Bevorzugt ist das Metall des jeweiligen Stromkollektors dort unbedeckt, so dass es für elektrische Kontaktierungen, beispielsweise durch Verschweißung, zur Verfügung steht.

In einigen Ausführungsformen kann das Metall des jeweiligen Stromkollektors in den freien Randstreifen aber auch mit einem Stützmaterial beschichtet sein, das thermisch beständiger als der damit beschichtete Stromkollektor ist.

"Thermisch beständiger" soll hierbei bedeuten, dass das Stützmaterial bei einer Temperatur, bei der das Metall des Stromkollektors schmilzt, einen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Bevorzugt weisen sowohl der Anodenstromkollektor als auch der Kathodenstromkollektor jeweils mindestens einen freien Randstreifen auf, der nicht mit dem jeweiligen Elektrodenmaterial beladen ist. In einer Weiterbildung ist es bevorzugt, dass sowohl der mindestens eine freie Randstreifen des Anodenstromkollektors als auch der mindestens eine freie Randstreifen des Kathodenstromkollektors mit dem Stützmaterial beschichtet sind. Besonders bevorzugt wird für jeden der Bereiche das gleiche Stützmaterial verwendet.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Lithium-lonen-Zelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAIN) oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff keramisches Material ist vorliegend breit auszulegen. Insbesondere sind hierunter Carbi-de, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die bandförmigen Hauptbereiche von Anodenstromkollektor und Kathodenstromkollektor erstrecken sich bevorzugt parallel zu den jeweiligen Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial neben den bandförmigen Hauptbereichen aufgebracht, bedeckt die freien Bereiche dabei jedoch nicht vollständig. Beispielsweise wird es in Form eines Streifens oder einer Linie entlang eines Längsrands von Anoden- und/oder Kathodenstromkollektor aufgebracht, so dass es den jeweiligen Randstreifen nur teilweise bedeckt. Unmittelbar entlang dieses Längsrands kann dabei ein langgestreckter Teilbereich des freien Randstreifens unbedeckt bleiben.

Besonders bevorzugt ist die erfindungsgemäße Lithium-Ionen-Zelle eine sekundäre Lithium-Ionen-Zelle.

Für Anode und Kathode können im Grunde sämtliche für Lithium-Ionen-Zellen bekannten Elektrodenmaterialien verwendet werden.

In der negativen Elektrode kommen als Aktivmaterialien bevorzugt Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Auch Lithiumtitanat (Li₄Ti₅O₁₂) ist als Aktivmaterial geeignet. Alternativ oder zusätzlich können auch metallische und halbmetallische Materialien, die mit Lithium legierbar sind, zum Einsatz kommen, beispielsweise unter Verwendung der Elemente Zinn, Antimon und Silizium, die in der Lage sind, mit Lithium intermetallische Phasen zu bilden. Auch diese Materialien kommen bevorzugt in Partikelform zum Einsatz.

Für die positive Elektrode können als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}M_{0.39}Co_{0.16}Al_{0.05})_{0.89}O₂ oder Li₁₊ₓM-O Verbindungen und/oder Mischungen der genannten Materialien können eingesetzt werden.

Als elektrochemisch inaktive Komponenten können die Elektrodenmaterialien beispielsweise einen Elektrodenbinder und ein Leitmittel enthalten. Die partikelförmigen Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid, Polyacrylat oder Carboxymethylzellulose. Übliche Leitmittel sind Ruß und Metallpulver.

Weiterhin umfasst die Zelle bevorzugt einen Elektrolyten, insbesondere auf der Basis mindestens eines Lithiumsalzes wie beispielsweise Lithiumhexafluorophosphat, das in einem organischen Lösungsmittel gelöst vorliegt (z. B. in einer Mischung organischer Carbonate).

Bei dem Separator handelt es sich beispielsweise um eine elektrisch isolierende Kunststofffolie, die von dem Elektrolyten durchdrungen werden kann, beispielsweise weil sie Mikroporen aufweist. Die Folie kann beispielsweise aus einem Polyolefin oder aus einem Polyetherketon gebildet sein. Auch Vliese und Gewebe aus solchen Kunststoffmaterialien können als Separator zum Einsatz kommen.

Neben den genannten Elementen umfasst die erfindungsgemäße Lithium-Ionen-Zelle zweckmäßigerweise auch ein Gehäuse, das den Elektroden-Separator-Verbund in Form eines Wickels bevorzugt gas- und/oder flüssigkeitsdicht umschließt.

Das Gehäuse umfasst in aller Regel einen zylindrischen Gehäusemantel sowie ein kreisrundes Oberteil und ein kreisrundes Unterteil. Beispielsweise kann das Gehäuse ein becherförmiges erstes Gehäuseteil umfassen, dessen Boden dem kreisrunden Unterteil entspricht, sowie als zweites Gehäuseteil einen kreisrunden Deckel, der zum Verschluss des ersten Gehäuseteils dient. Gewöhnlich sind die beiden Gehäuseteile durch eine elektrisch isolierende Dichtung voneinander getrennt. Die Gehäuseteile können z.B. aus einem vernickelten Stahlblech oder einem ähnlichen metallischen Werkstoff bestehen.

Der Elektroden-Separator-Verbund liegt bevorzugt in Form eines zylindrischen Wickels vor. Die Bereitstellung der Elektroden in Form eines solchen Wickels erlaubt eine besonders vorteilhafte Raumnutzung in zylindrischen Gehäusen. Das Gehäuse ist daher in bevorzugten Ausführungsformen ebenfalls zylindrisch.

Besonders zeichnet sich die erfindungsgemäße Zelle durch das unmittelbar folgende Merkmal j. aus:
j. der bandförmige Hauptbereich des mit dem Kontaktblechteil durch Verschweißung verbundenen Stromkollektors weist eine Vielzahl von Durchbrechungen auf.

Die Vielzahl von Durchbrechungen resultiert in einem verringerten Volumen und auch verringertem Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In besonders bevorzugten Ausgestaltungen ist die erfindungsgemäße Zelle durch mindestens eines der unmittelbar folgenden Merkmale a. und b. gekennzeichnet:
a. Bei den Durchbrechungen in dem Hauptbereich handelt es sich um runde oder eckige Löcher, insbesondere Stanz- oder Bohrlöcher.
b. Der mit dem Kontaktblechteil durch Verschweißung verbundene Stromkollektor ist in dem Hauptbereich perforiert, insbesondere durch Rundloch- oder Schlitzlochperforation.

In einigen bevorzugten Ausführungsformen sind die Durchbrechungen mittels Laser in den bandförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann hingegen sein, bei der Einbringung der Durchbrechungen darauf zu achten, dass der maximale Durchmesser der Durchbrechungen nicht zu groß ist. Bevorzugt sollten die Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit dem Kontaktblechteil durch Verschweißung verbundene Stromkollektor weist zumindest in einem Teilabschnitt des Hauptbereichs ein geringeres Flächengewicht auf als der freie Randstreifen desselben Stromkollektors.
b. Der mit dem Kontaktblechteil durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Der freien Randstreifen von Anoden- und Kathodenstromkollektor begrenzen den Hauptbereich zu den ersten Längsrändern hin. Bevorzugt umfassen der Anoden- und der Kathodenstromkollektor freie Randstreifen jeweils entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektor weist in dem Hauptbereich eine Zugfestigkeit von 20 N/mm² bis 250 N/mm² auf.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oder ähnlich ausgebildet sind. Die jeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der bandförmige Hauptbereich des Anodenstromkollektors und der bandförmige Hauptbereich des Kathodenstromkollektors sind beide durch eine Vielzahl der Durchbrechungen gekennzeichnet.
b. Die Zelle umfasst das Kontaktblechteil, das mit einem der ersten Längsränder in unmittelbarem Kontakt steht, als erstes Kontaktblechteil, sowie weiterhin ein zweites metallisches Kontaktblechteil, das mit dem anderen der ersten Längsränder in unmittelbarem Kontakt steht.
c. Das zweite Kontaktblechteil ist mit diesem anderen Längsrand durch Verschweißung verbunden.

Es ist besonders bevorzugt, dass die unmittelbar vorstehenden Merkmale a. bis c. in Kombination miteinander verwirklicht sind. Die Merkmale b. und c. können in Kombination aber auch ohne Merkmal a. realisiert sein.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

Die Verwendung perforierter oder auf sonstige Weise mit einer Vielzahl von Durchbrechungen versehener Stromkollektoren ist bei Lithium-ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren vielfach über separate elektrische Ableiterfahnen. Eine zuverlässige Verschweißung dieser Ableiterfahnen an perforierte Stromkollektoren in industriellen Massenproduktionsprozessen ist ohne eine akzeptable Fehlerrate jedoch nur schwer realisierbar.

Erfindungsgemäß wird dieses Problem durch die beschriebene Verschweißung der Stromkollektorränder mit der oder den Kontaktblechteilen gelöst. Das erfindungsgemäße Konzept ermöglicht den vollständigen Verzicht auf separate Ableiterfahnen und ermöglicht so die Verwendung materialarmer, mit Durchbrechungen versehener Stromkollektoren. Insbesondere in Ausführungsformen, bei denen die freien Randstreifen der Stromkollektoren nicht mit Durchbrechungen versehen sind, kann eine Verschweißung zuverlässig mit ausgesprochen geringen Ausschussraten erfolgen.

Das Konzept der Verschweißung der Ränder von Stromkollektoren mit Kontaktblechteilen ist bereits aus der WO 2017/215900 A1 oder aus der JP 2004-119330 A bekannt. Die Verwendung von Kontaktblechteilen ermöglicht besonders hohe Strombelastbarkeiten und einen geringen Innenwiderstand. Bezüglich erfindungsgemäß einsetzbarer Kontaktblechteile und Verfahren zur elektrischen Verbindung von Kontaktblechteilen mit den Rändern von Stromkollektoren wird daher auf den Inhalt der WO 2017/215900 A1 und der JP 2004-119330 A vollumfänglich Bezug genommen.

Werden als Stromkollektoren sehr dünne Metallfolien verwendet, so können die Längsränder der Stromkollektoren mechanisch außerordentlich empfindlich sein und während der Verschweißung mit Kontaktblechteilen unbeabsichtigt niedergedrückt oder niedergeschmolzen werden. Weiterhin kann es beim Anschweißen der Kontaktblechteile zu einem Schmelzen von Separatoren des Elektroden-Separator-Verbunds kommen. Die oben beschriebene Stützschicht wirkt dem entgegen.

Die im Rahmen der vorliegenden Erfindung bevorzugt einsetzbaren Kontaktblechteile können auch als Kontaktplatten bezeichnet werden. Sie sind in bevorzugten Ausführungsformen plattenförmig ausgebildet.

In einigen bevorzugten Ausführungsformen weist die erfindungsgemäße Zelle mindestens eines der unmittelbar folgenden Merkmale a. und b. auf:
a. Als Kontaktblechteile, insbesondere als Kontaktplatten, werden Blechteile, insbesondere Metallplatten, mit einer Dicke im Bereich von 100 µm bis 600 µm, bevorzugt 150 - 350 µm, eingesetzt.
b. Die Kontaktblechteile, insbesondere die Kontaktplatten, bestehen aus Aluminium, Titan, Nickel, Edelstahl oder vernickeltem Stahl.

Die Kontaktblechteile, insbesondere die Kontaktplatten, können mindestens einen Schlitz und/oder mindestens eine Perforierung aufweisen. Diese dienen dazu, einer Verformung der Kontaktblechteile, insbesondere der Platten, bei der Herstellung der Schweißverbindung entgegenzuwirken.

Die Kontaktblechteile können in Form von Streifen ausgebildet sein, insbesondere von Streifen mit besagter Dicke im Bereich von 100 µm bis 600 µm, bevorzugt von 150 bis 350 µm, oder einen solchen Metallstreifen umfassen.

In bevorzugten Ausführungsformen weisen erfindungsgemäß einsetzbare Kontaktblechteile, insbesondere Kontaktplatten, die Form einer Scheibe, insbesondere die Form einer kreisförmigen oder zumindest näherungsweise kreisförmigen Scheibe, auf. Sie weisen dann also einen äußeren kreisförmigen oder zumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

Die einsetzbaren Kontaktblechteile, insbesondere Kontaktplatten, können auch eine polygonale, beispielsweise eine rechteckige, pentagonale oder hexagonale Grundfläche aufweisen.

In Fällen mit zwei Kontaktblechteilen, insbesondere mit zwei Kontaktplatten, sind bevorzugt beide Kontaktblechteile, insbesondere beide Kontaktplatten, mit einem Pol der erfindungsgemäßen Zelle, beispielsweise einem Gehäusepol, elektrisch verbunden.

In besonders bevorzugten Ausführungsformen bestehen der Anodenstromkollektor und das daran geschweißte Kontaktblechteil, insbesondere die daran geschweißte Kontaktplatte, beide aus dem gleichen Material. Dieses wird besonders bevorzugt aus der Gruppe mit Kupfer, Nickel, Titan, vernickeltem Stahl und Edelstahl gewählt.

In weiteren besonders bevorzugten Ausführungsformen bestehen der Kathodenstromkollektor und das daran geschweißte Kontaktblechteil, insbesondere die daran geschweißte Kontaktplatte, beide aus dem gleichen Material. Dieses wird besonders bevorzugt aus der Gruppe mit Aluminium, Titan und Edelstahl (z.B. vom Typ 1.4404) gewählt.

In möglichen bevorzugten Weiterbildungen zeichnet sich die erfindungsgemäße Zelle durch mindestens eines der unmittelbar folgenden Merkmale a. bis c. aus:
a. Das mit dem Längsrand des Anodenstromkollektors durch Verschweißung verbundene metallische Kontaktblechteil, insbesondere die mit dem Längsrand des Anodenstromkollektors durch Verschweißung verbundene metallische Kontaktplatte, steht derart mit dem Längsrand in Kontakt, dass sich eine linienartige Kontaktzone ergibt.
b. Das mit dem Längsrand des Kathodenstromkollektors durch Verschweißung verbundene metallische Kontaktblechteil, insbesondere die mit dem Längsrand des Kathodenstromkollektors durch Verschweißung verbundene metallische Kontaktplatte, steht derart mit dem Längsrand in Kontakt, dass sich eine linienartige Kontaktzone ergibt.
c. Der erste Längsrand des Anodenstromkollektors und/oder des Kathodenstromkollektors umfasst einen oder mehrere Abschnitte, die jeweils über ihre gesamte Länge über eine Schweißnaht durchgehend mit dem jeweiligen Kontaktblechteil, insbesondere mit der jeweiligen Kontaktplatte, verbunden sind.

Die unmittelbar vorstehenden Merkmale a. und b. können sowohl unabhängig voneinander als auch in Kombination realisiert sein. Bevorzugt sind die Merkmale a. und b. allerdings in beiden Fällen in Kombination mit dem unmittelbar vorstehenden Merkmal c. realisiert.

Über die Kontaktblechteile ist es möglich, die Stromkollektoren und damit auch die dazugehörigen Elektroden über ihre gesamte Länge elektrisch zu kontaktieren. Dies senkt den Innenwiderstand innerhalb der erfindungsgemäßen Zelle sehr deutlich. Die beschriebene Anordnung kann das Auftreten großer Ströme somit hervorragend abfangen. Mit minimiertem Innenwiderstand reduzieren sich thermische Verluste bei hohen Strömen. Zudem wird die Abfuhr thermischer Energie aus dem gewickelten Elektroden-Separator-Verbund begünstigt. Bei starken Belastungen tritt eine Erwärmung nicht lokal sondern gleichmäßig verteilt auf.

Es gibt mehrere Möglichkeiten, wie die Kontaktblechteile, insbesondere die Kontaktplatten, mit den Längsrändern verbunden werden können.

Die Kontaktblechteile, insbesondere die Kontaktplatten, können mit den Längsrändern entlang der linienartigen Kontaktzonen über mindestens eine Schweißnaht verbunden sein. Die Längsränder können also einen oder mehrere Abschnitte umfassen, die jeweils über ihre gesamte Länge über eine Schweißnaht durchgehend mit dem oder den Kontaktblechteilen, insbesondere der oder den Kontaktplatten, verbunden sind. Besonders bevorzugt weisen diese Abschnitte eine Mindestlänge von 5 mm, bevorzugt von 10 mm, besonders bevorzugt von 20 mm, auf.

In einer möglichen Weiterbildung erstrecken sich der oder die mit dem Kontaktblechteil, insbesondere der Kontaktplatte, über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes.

In einigen bevorzugten Ausführungsformen sind die Längsränder über ihre gesamte Länge durchgehend mit dem Kontaktblechteil, insbesondere der Kontaktplatte, verschweißt.

In weiteren möglichen Ausführungsformen sind die Kontaktblechteile, insbesondere die Kontaktplatten, mit dem jeweiligen Längsrand über eine Mehrzahl oder Vielzahl von Schweißpunkten verbunden.

Der Elektroden-Separator-Verbund liegt bevorzugt in Form eines spiralförmigen Wickels vor. Hieraus resultiert, dass die aus den endständigen Stirnseiten des Wickels austretenden Längsränder des Anodenstromkollektors und des Kathodenstromkollektors ebenfalls eine spiralförmige Geometrie aufweisen. Analoges gilt für die linienartige Kontaktzone, entlang der die Kontaktblechteile, insbesondere die Kontaktplatten, mit dem jeweiligen Längsrand verschweißt sind.

Bei Verwendung von Kontaktblechteilen, insbesondere von Kontaktplatten, ist es in der Regel erforderlich, die Kontaktblechteile, insbesondere die Kontaktplatten, elektrisch mit dem Gehäuse zu verbinden oder aber mit elektrischen Leitern, die aus dem Gehäuse herausgeführt sind. Beispielsweise können die Kontaktblechteile, insbesondere die Kontaktplatten, hierzu mit den erwähnten Gehäuseteilen unmittelbar oder über elektrische Leiter verbunden werden. Da die Gehäuseteile oft als elektrische Pole der Zellen dienen, ist dies häufig sogar zwingend erforderlich.

In einer besonders bevorzugten Ausführungsform können das kreisrunde Oberteil und/oder das kreisrunde Unterteil des Gehäuses der erfindungsgemäßen Lithium-lonen-Zelle als Kontaktblechteile, insbesondere die Kontaktplatten dienen. Beispielsweise ist es möglich, dass der erwähnte kreisrunde Deckel, der zum Verschluss des ersten Gehäuseteils dient, als Kontaktblechteil, insbesondere als Kontaktplatte, mit einem der aus den endständigen Stirnseiten des Wickels austretenden Längsrändern des Anoden- oder des Kathodenstromkollektors zu verschweißen. Gleichermaßen ist es denkbar, einen dieser Längsränder mit der innenliegenden Seite des Bodens des becherförmigen ersten Gehäuseteils zu verschweißen.

Diese Ausführungsform kann besonders vorteilhaft sein. Zum einen ist sie aus Entwärmungsaspekten optimal. Innerhalb des Wickels entstehende Wärme kann über die Längsränder direkt ans Gehäuse abgegeben werden, im Falle einer Verschweißung entlang der linienarten Kontaktzone nahezu ohne jeden Engpass. Zum anderen lässt sich auf diese Weise das Innenvolumen eines Zellgehäuses nahezu optimal ausnutzen. Separate Kontaktblechteile, insbesondere separate Kontaktplatten, und elektrische Leiter zum Verbinden der Kontaktblechteile mit dem Gehäuse, benötigen Raum innerhalb von Zellgehäusen. Bei Verzicht auf solche separaten Komponenten steht dieser Raum für Aktivmaterial zur Verfügung. So kann die Energiedichte erfindungsgemäßer Zellen weiter erhöht werden.

Zu betonen ist, dass diese Ausführungsform völlig unabhängig von Merkmal j. aus Anspruch 1 realisierbar ist. Die Erfindung umfasst somit auch Zellen mit den Merkmalen a. bis i. des Anspruchs 1, bei denen das kreisrunde Oberteil und/oder das kreisrunde Unterteil als Kontaktblechteil, insbesondere als Kontaktplatte, dienen, bei denen die Stromkollektoren aber nicht zwingend die Vielzahl von Durchbrechungen aufweisen.

In weiteren möglichen bevorzugten Weiterbildungen zeichnet sich die erfindungsgemäße Zelle durch mindestens eines der unmittelbar folgenden Merkmale a. bis c. aus:
a. Der Separator ist ein bandförmiges Kunststoffsubstrat mit einer Dicke im Bereich von 5 µm bis 50 µm, bevorzugt im Bereich von 7 µm bis 12 µm, sowie mit einem ersten und einem zweiten Längsrand und zwei Endstücken.
b. Die Längsränder des Separators bilden die endständigen Stirnseiten des Elektroden-Separator-Verbunds.
c. Die aus den endständigen Stirnseiten des Wickels austretenden Längsränder des Anodenstromkollektors und/oder des Kathodenstromkollektors ragen nicht mehr als 5000 µm, bevorzugt nicht mehr als 3500 µm, aus den Stirnseiten heraus.

Es ist besonders bevorzugt, dass die unmittelbar vorstehenden Merkmale a. bis c. in Kombination miteinander verwirklicht sind.

Besonders bevorzugt ragt der Längsrand des Anodenstromkollektors aus der Stirnseite des Wickels nicht mehr als 2500 µm, besonders bevorzugt nicht mehr als 1500 µm, heraus.

Besonders bevorzugt ragt der Längsrand des Kathodenstromkollektors aus der Stirnseite des Wickels nicht mehr als 3500 µm, besonders bevorzugt nicht mehr als 2500 µm, heraus.

Die Zahlenangaben zum stirnseitigen Überstand des Anodenstromkollektors und/oder des Kathodenstromkollektors beziehen sich auf den freien Überstand bevor die Stirnseiten mit dem Kontaktblechteil, insbesondere mit der Kontaktplatte, in Kontakt gebracht werden. Beim Kontaktieren und Anschweißen des Kontaktblechteils, insbesondere der Kontaktplatte, kann es zu Deformationen der Ränder der Stromkollektoren kommen.

Je geringer der freie Überstand gewählt wird, desto breiter können die mit Elektrodenmaterial bedeckten bandförmigen Hauptbereiche der Stromkollektoren ausgebildet werden. Dies trägt positiv zur Energiedichte der erfindungsgemäßen Zelle bei.

Bevorzugt sind die bandförmige Anode und die bandförmige Kathode innerhalb des Elektroden-Separator-Verbunds versetzt zueinander angeordnet, um zu gewährleisten, dass der erste Längsrand des Anodenstromkollektors aus einer der endständigen Stirnseiten und der erste Längsrand des Kathodenstromkollektors aus der anderen der endständigen Stirnseiten austritt.

Bei der erfindungsgemäßen Lithium-lonen-Zelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Knopfzelle ausgebildeten erfindungsgemäßen Lithium-Ionen-Zelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Lithium-Ionen-Zelle eine zylindrische Rundzelle. Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Bevorzugt liegt die Höhe als Rundzelle ausgebildeter Lithium-Ionen-Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 × 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als zylindrische Rundzelle ausgebildeten erfindungsgemäßen Lithium-Ionen-Zelle beträgt bevorzugt bis zu 90000 mAh. Mit dem Formfaktor von 21 × 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18x65 weisen die Stromkollektoren bevorzugt
- eine Breite von 56 mm bis 62 mm, bevorzugt von 60 mm, und
- eine Länge von nicht mehr als 1,5 m
   auf.

Im Falle einer zylindrischen Rundzelle mit dem Formfaktor 21 × 70 weisen die Stromkollektoren bevorzugt
- eine Breite von 56 mm bis 68 mm, bevorzugt von 65 mm, und
- eine Länge von nicht mehr als 2,5 m
   auf.

Das oben beschriebene Design der erfindungsgemäßen Zelle ermöglicht noch einen weiteren, signifikanten Vorteil. Bei Elektroden, bei denen die elektrische Anbindung der Stromkollektoren über die eingangs erwähnten separaten Ableiterfahnen erfolgt, tritt beim Laden und Entladen unmittelbar in der Nähe der Ableiterfahnen eine größere thermo-mechanische Belastung auf als entfernt von den Ableiterfahnen. Dieser Unterschied tritt besonders ausgeprägt bei negativen Elektroden zu Tage, die als Aktivmaterial einen Anteil an Silizium, Zinn und/oder Antimon aufweisen, da Partikel aus diesen Materialien beim Laden und Entladen vergleichsweise starken Volumenänderungen unterliegen. So erwiesen sich beispielsweise Anteile von mehr als 10 % Silizium in negativen Elektroden daher bislang nur als schwer beherrschbar.

Die elektrische Anbindung des oder der Stromkollektoren über Kontaktblechteile, insbesondere über Kontaktplatten, ermöglicht nicht nur die erwähnte gleichmäßige Entwärmung von Zellen, vielmehr werden dadurch auch die beim Laden und Entladen auftretenden thermo-mechanischen Belastungen gleichmäßig auf den Wickel verteilt. Überraschenderweise ermöglicht dies die Beherrschung sehr hoher Anteile an Silizium und/oder Zinn und/oder Antimon in der negativen Elektrode, bei Anteilen > 20 % wurden beim Laden und Entladen vergleichsweise selten oder keine Schäden in Folge der thermomechanischen Belastungen beobachtet. Durch Erhöhung des Anteils an beispielsweise Silizium in der Anode lässt sich auch die Energiedichte der Zelle weiter erhöhen.

Entsprechend zeichnet sich die erfindungsgemäße Zelle in besonders bevorzugten Ausführungsformen durch das unmittelbar folgende Merkmal a. aus:
a. Das negative Elektrodenmaterial umfasst als negatives Aktivmaterial Silizium, Aluminium, Zinn und/oder Antimon, insbesondere partikuläres Silizium, Aluminium, Zinn und/oder Antimon, in einem Anteil von 20 Gew.-% bis 90 Gew.-%.

Die Gewichtsangaben beziehen sich hierbei auf die Trockenmasse des negativen Elektrodenmaterials, also ohne Elektrolyt und ohne Berücksichtigung des Gewichts des Anodenstromkollektors.

Zu betonen ist, dass auch diese Ausführungsform völlig unabhängig von Merkmal j. aus Anspruch 1 realisierbar ist. Die Erfindung umfasst somit auch Zellen mit den Merkmalen a. bis i. des Anspruchs 1, bei denen die Anode im geladenen Zustand partikuläres Silizium in einem Anteil von 20 Gew.-% bis 90 Gew.-% umfasst, bei denen die Stromkollektoren aber nicht zwingend die Vielzahl von Durchbrechungen aufweisen.

Aus den Aktivmaterialien Silizium, Aluminium, Zinn und Antimon ist Silizium besonders bevorzugt.

Der Fachmann versteht, dass es sich bei dem Zinn, dem Aluminium, dem Silizium und dem Antimon nicht zwingend um Metalle in ihrer Reinstform handeln muss. So können beispielsweise Silizium-Partikel auch Spuren anderer Elemente, insbesondere anderer Metalle (abgesehen von Lithium), aufweisen, beispielsweise in Anteilen von bis zu 10 Gew.-%.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In den Zeichnungen zeigen schematisch
Fig. 1 eine geschnittene Ansicht einer möglichen Ausführungsform einer erfindungsgemäßen Zelle,
Fig. 2 eine Draufsicht eines Stromkollektors in einer erfindungsgemäßen Ausgestaltung,
Fig. 3 eine geschnittene Ansicht des in Fig. 2 dargestellten Stromkollektors,
Fig. 4 eine Draufsicht einer Anode, die zu einem Elektroden-Separator-Verbund in Form eines Wickels verarbeitet werden kann,
Fig. 5 eine geschnittene Ansicht der in Fig. 4 dargestellten Anode,
Fig. 6 eine Draufsicht auf einen unter Verwendung der in Fig. 4 dargestellten Anode gefertigten Elektroden-Separator-Verbund, und
Fig. 7 eine geschnittene Ansicht des in Fig. 6 dargestellten Elektroden-Separator-Verbunds.

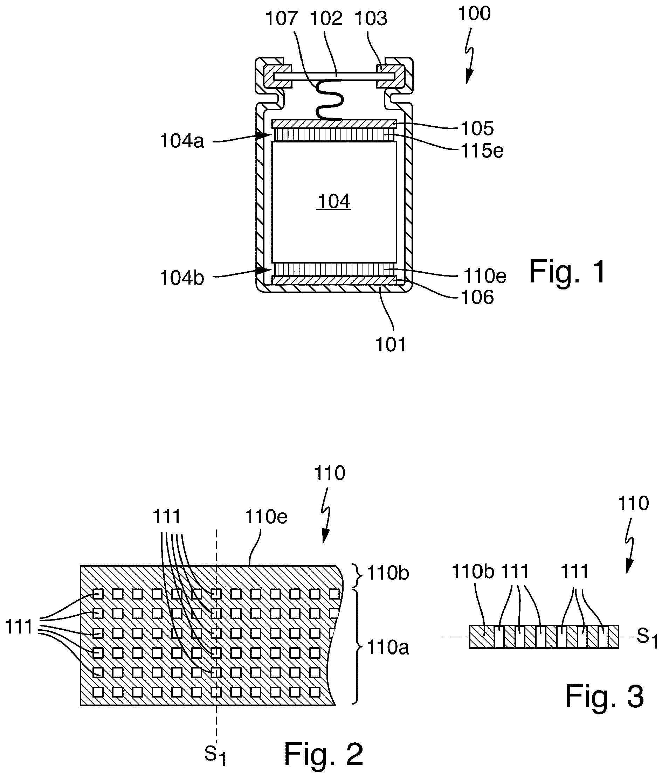

Die in Fig. 1 dargestellte Lithium-Ionen-Zelle 100 umfasst ein Gehäuse aus dem becherförmigen Gehäuseteil 101 und dem scheibenförmigen Gehäuseteil 102. Die beiden Gehäuseteile (101; 102) sind durch die Dichtung 103 voneinander getrennt. Innerhalb des Gehäuses ist der Elektroden-Separator-Verbund 104 in Form eines spiralförmigen Wickels mit den Stirnseiten 104a und 104b angeordnet. Der Elektroden-Separator-Verbund 104 umfasst eine spiralförmige aufgewickelte Anode und eine spiralförmig aufgewickelte Kathode, die jeweils als Stromkollektor eine bandförmige Metallfolie aufweisen (in Fig. 1 nicht separat dargestellt). Die Elektroden sind innerhalb des Verbundes 104 versetzt zueinander angeordnet, so dass ein Längsrand 110e des Stromkollektors der Anode aus einer der Stirnseiten 104a und 104b und ein Längsrand 115e des Stromkollektors der Kathode aus der anderen der Stirnseiten austritt. Die Zelle 100 umfasst zwei metallische Kontaktplatten 105 und 106, die mit den Längsrändern 110e und 115e in unmittelbarem Kontakt stehen und mit diesen verschweißt sind. Die Kontaktplatte 105 ist über den elektrischen Leiter 107 mit dem Gehäuseteil 102 verbunden. Die Kontaktplatte 106 ist unmittelbar mit dem Boden des becherförmigen Gehäuseteils 101 verschweißt.

Fig. 2 und Fig. 3 veranschaulichen das Design eines Stromkollektors 110, der in der in Fig. 1 dargestellten Zelle verwendet werden kann. Bei Fig. 3 handelt es sich um einen Schnitt entlang S₁. Der Stromkollektor 110 umfasst eine Vielzahl Durchbrechungen 111, bei denen es sich um rechteckige Löcher handelt. Der Bereich 110a ist durch die Durchbrechungen 111 gekennzeichnet, wohingegen sich im Bereich 110b entlang des Längsrands 110e keine Durchbrechungen finden. Der Stromkollektor 110 weist daher im Bereich 110a ein deutlich geringeres Flächengewicht auf als im Bereich 110b.

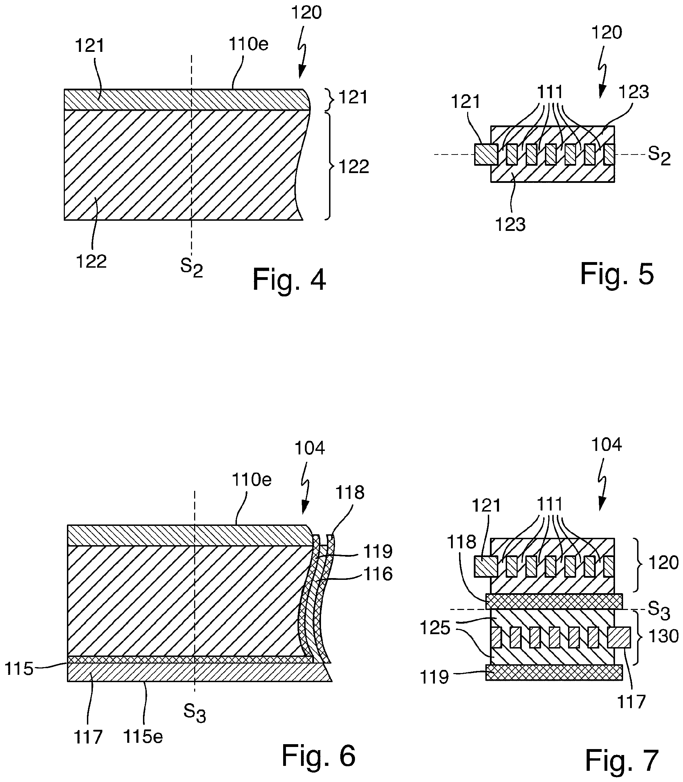

Fig. 4 und Fig. 5 veranschaulichen eine Anode 120, die unter beidseitigem Auftrag eines negativen Elektrodenmaterials 123 auf den in Fig. 2 und Fig. 3 dargestellten Stromkollektor 110 gefertigt wurde. Bei Fig. 5 handelt es sich um einen Schnitt entlang S₂. Der Stromkollektor 110 weist nun einen bandförmigen Hauptbereich 122 auf, der mit einer Schicht aus dem negativen Elektrodenmaterial 123 beladen ist, sowie einen freien Randstreifen 121, der sich entlang des Längsrands 110e erstreckt und der nicht mit dem Elektrodenmaterial 123 beladen ist. Das Elektrodenmaterial 123 befüllt darüber hinaus auch die Durchbrechungen 111.

Fig. 6 und Fig. 7 veranschaulichen einen Elektroden-Separator-Verbund 104, der unter Verwendung der in Fig. 4 und Fig. 5 dargestellten Anode 120 gefertigt wurde. Daneben umfasst er die Kathode 115 sowie die Separatoren 118 und 119. Bei Fig. 7 handelt es sich um einen Schnitt entlang S₃. Die Kathode 115 baut auf dem gleichen Stromkollektordesign auf wie die Anode 120. Bevorzugt unterscheiden sich die Stromkollektoren 110 und 115 von Anode 120 und Kathode 130 nur durch die jeweilige Materialauswahl. So umfasst der Stromkollektor 115 der Kathode 130 einen bandförmigen Hauptbereich 116, der mit einer Schicht aus positivem Elektrodenmaterial 125 beladen ist, sowie einen freien Randstreifen 117, der sich entlang des Längsrands 115e erstreckt und der nicht mit dem Elektrodenmaterial 125 beladen ist. Durch spiralförmiges Aufwickeln kann der Elektroden-Separator-Verbund 104 in einen Wickel überführt werden, wie er in einer erfindungsgemäßen Zelle enthalten sein kann.

## Patentansprüche

1. Lithium-Ionen-Zelle (100) mit den Merkmalen
a. die Zelle (100) umfasst einen bandförmigen Elektroden-Separator-Verbund (104) mit der Sequenz Anode (120) / Separator (118) / Kathode (130),
b. die Anode (120) umfasst als Anodenstromkollektor (110) eine bandförmige Metallfolie mit einer Dicke im Bereich von 4 µm bis 30 µm sowie mit einem ersten Längsrand (110e) und einem zweiten Längsrand und zwei Endstücken,
c. der Anodenstromkollektor (110) weist einen bandförmigen Hauptbereich (122), der mit einer Schicht aus negativem Elektrodenmaterial (123) beladen ist, sowie einen freien Randstreifen (121), der sich entlang des ersten Längsrands (110e) erstreckt und der nicht mit dem Elektrodenmaterial (123) beladen ist, auf,
d. die Kathode umfasst als Kathodenstromkollektor (115) eine bandförmige Metallfolie mit einer Dicke im Bereich von 4 µm bis 30 µm sowie mit einem ersten Längsrand (115e) und einem zweiten Längsrand und zwei Endstücken,
e. der Kathodenstromkollektor (115) weist einen bandförmigen Hauptbereich (116), der mit einer Schicht aus positivem Elektrodenmaterial (125) beladen ist, sowie einen freien Randstreifen (117), der sich entlang des ersten Längsrands (115e) erstreckt und der nicht mit dem Elektrodenmaterial (125) beladen ist, auf,
f. der Elektroden-Separator-Verbund (104) liegt in Form eines Wickels mit zwei endständigen Stirnseiten (104a, 104b) vor,
g. die Anode und die Kathode sind derart ausgebildet und/oder innerhalb des Elektroden-Separator-Verbunds (104) derart zueinander angeordnet, dass der erste Längsrand (110e) des Anodenstromkollektors (110) aus einer der endständigen Stirnseiten (104b) und der erste Längsrand (115e) des Kathodenstromkollektors (115) aus der anderen der endständigen Stirnseiten (104a) austritt,
h. die Zelle (100) umfasst ein metallisches Kontaktblechteil (105, 106), das mit einem der ersten Längsränder (110e, 115e) in unmittelbarem Kontakt steht, und
i. das Kontaktblechteil (105, 106) ist mit diesem Längsrand (110e, 115e) durch Verschwei-ßungverbunden,
sowie dem zusätzlichen kennzeichnenden Merkmal
j. der bandförmige Hauptbereich (122, 116) des mit dem Kontaktblechteil (105, 106) durch Verschweißungverbundenen Stromkollektors (110, 115) weist eine Vielzahl von Durchbrechungen (111) auf.

2. Zelle nach Anspruch 1 mit mindestens einem der folgenden zusätzlichen Merkmale:
a. Bei den Durchbrechungen (111) in dem Hauptbereich handelt es sich um runde oder eckige Löcher, insbesondere Stanz- oder Bohrlöcher.
b. Der mit dem Kontaktblechteil (105,106) durch Verschweißung verbundene Stromkollektor (110, 115) ist in dem Hauptbereich (122, 116) perforiert, insbesondere durch Rundloch- oder Schlitzlochperforation.

3. Zelle nach einem der vorhergehenden Ansprüche mit dem folgenden zusätzlichen Merkmal:
a. Die Durchbrechungen (111) in dem Stromkollektor, insbesondere in dem Hauptbereich, weisen einen mittleren Durchmesser im Bereich von 1 µm bis 2000 µm auf.

4. Zelle nach Anspruch 1 oder nach Anspruch 2 mit mindestens einem der folgenden zusätzlichen Merkmale:
a. Der mit dem Kontaktblechteil (105,106) durch Verschweißung verbundene Stromkollektor (110, 115) weist zumindest in einem Teilabschnitt des Hauptbereichs (122, 116) ein geringeres Flächengewicht auf als derfreie Randstreifen (121, 117) desselben Stromkollektors.
b. Der mit dem Kontaktblechteil (105,106) durch Verschweißung verbundene Stromkollektor (110, 115) weist in dem freien Randstreifen (121, 117) keine oder weniger Durchbrechungen (111) pro Flächeneinheit als in dem Hauptbereich (122, 116) auf.

5. Zelle nach einem der vorhergehenden Ansprüche mit mindestens einem der folgenden zusätzlichen Merkmale:
a. Das Flächengewicht des Stromkollektors (110, 115) ist in dem Hauptbereich (122, 116) gegenüber dem Flächengewicht des Stromkollektors (110, 115) in dem freien Randstreifen (121, 117) um 5 % bis 80 % reduziert.
b. Der Stromkollektor (110, 115) weist in dem Hauptbereich (122, 116) eine Lochfläche im Bereich von 5 % bis 80 % auf.
c. Der Stromkollektor (110, 115) weist in dem Hauptbereich eine Zugfestigkeit von 20 N/mm² bis 250 N/mm² auf.

6. Zelle nach einem der vorhergehenden Ansprüche mit den folgenden zusätzlichen Merkmalen:
a. der bandförmige Hauptbereich (122) des Anodenstromkollektors (110) und der bandförmige Hauptbereich (116) des Kathodenstromkollektors (115) sind beide durch eine Vielzahl der Durchbrechungen (111) gekennzeichnet.
b. Die Zelle (100) umfasst das Kontaktblechteil (106), das mit dem einem der ersten Längsränder (110e) in unmittelbarem Kontakt steht, als erstes Kontaktblechteil, sowie weiterhin ein zweites metallisches Kontaktblechteil (105), das mit dem anderen der ersten Längsränder (115e) in unmittelbarem Kontakt steht.
c. Das zweite Kontaktblechteil (105) ist mit diesem anderen Längsrand (115e) durch Verschweißung verbunden.

7. Zelle nach einem der vorhergehenden Ansprüche mit mindestens einem der folgenden zusätzlichen Merkmale:
a. Das mit dem Längsrand (110e) des Anodenstromkollektors (110) durch Verschweißung verbundene Kontaktblechteil (106) steht mit dem Längsrand derart in Kontakt, dass sich eine linienartige Kontaktzone ergibt.
b. Das mit dem Längsrand (115e) des Kathodenstromkollektors (115) durch Verschweißung verbundene Kontaktblechteil (105) steht mit dem Längsrand (115e) derart in Kontakt, dass sich eine linienartige Kontaktzone ergibt.
c. Der erste Längsrand (110e, 115e) des Anodenstromkollektors (110) und/oder des Kathodenstromkollektors (115) umfasst einen oder mehrere Abschnitte, die jeweils über ihre gesamte Länge über eine Schweißnaht durchgehend mit dem jeweiligen Kontaktblechteil (106, 105) verbunden sind.

8. Zelle nach einem der vorhergehenden Ansprüche mit mindestens einem der folgenden zusätzlichen Merkmale:
a. Der Separator (118, 119) ist ein bandförmiges Kunststoffsubstrat mit einer Dicke im Bereich von 5 µm bis 50 µm sowie mit einem ersten und einem zweiten Längsrand und zwei Endstücken.
b. Die Längsränder des Separators (118, 119) bilden die endständigen Stirnseiten (104a, 104b) des Elektroden-Separator-Verbunds (104).
c. Die aus den endständigen Stirnseiten (104a, 104b) des Wickels austretenden Längsränder (110e, 115e) des Anodenstromkollektors (110) und/oder des Kathodenstromkollektors (115) ragen maximal bis zu 5000 µm aus den Stirnseiten (104a, 104b) heraus.

## Claims

1. Lithium-ion cell (100) having the features:
a. the cell (100) comprises a tape-type electrode-separator composite (104) having the sequence anode (120)/separator (118)/cathode (130),
b. the anode (120) comprises, as anode current collector (110), a tape-type metal film having a thickness in the range of 4 µm to 30 µm and also having a first longitudinal edge (110e) and a second longitudinal edge and two end pieces,
c. the anode current collector (110) has a tape-type main region (122) laden with a layer of negative electrode material (123), and also a free edge strip (121) extending along the first longitudinal edge (110e) and not laden with the electrode material (123),
d. the cathode comprises, as cathode current collector (115), a tape-type metal film having a thickness in the range of 4 µm to 30 µm and also having a first longitudinal edge (115e) and a second longitudinal edge and two end pieces,
e. the cathode current collector (115) has a tape-type main region (116) laden with a layer of positive electrode material (125), and also a free edge strip (117) extending along the first longitudinal edge (115e) and not laden with the electrode material (125),
f. the electrode-separator composite (104) is present in the form of a winding having two terminal end faces (104a, 104b),
g. the anode and the cathode are formed and/or arranged relative to each other within the electrode-separator composite (104) such that the first longitudinal edge (110e) of the anode current collector (110) protrudes from one of the terminal end faces (104b) and the first longitudinal edge (115e) of the cathode current collector (115) protrudes from the other of the terminal end faces (104a),
h. the cell (100) has a metallic contact sheet metal member (105, 106) in direct contact with one of the first longitudinal edges (110e, 115e), and
i. the contact sheet metal member (105, 106) is connected to said longitudinal edge (110e, 115e) by welding,
and also the additional characterizing feature:
j. the tape-type main region (122, 116) of the current collector (110, 115) connected to the contact sheet metal member (105, 106) by welding has a plurality of apertures (111).

2. Cell according to Claim 1 having at least one of the following additional features:
a. the apertures (111) in the main region are round or angular holes, in particular stamped or drilled holes,
b. the current collector (110, 115) connected to the contact sheet metal member (105, 106) by welding is perforated in the main region (112, 116), in particular by round hole or slotted hole perforation.

3. Cell according to either of the preceding claims having the following additional feature:
a. the apertures (111) in the current collector, in particular in the main region, have an average diameter in the range of 1 µm to 2000 µm.

4. Cell according to Claim 1 or according to Claim 2 having at least one of the following additional features:
a. the current collector (110, 115) connected to the contact sheet metal member (105, 106) by welding has, at least in a partial section of the main region (122, 116), a lower weight per unit area than the free edge strip (121, 117) of the same current collector,
b. the current collector (110, 115) connected to the contact sheet metal member (105, 106) by welding has no or fewer apertures (111) per unit area in the free edge strip (121, 117) compared with the main region (122, 116).

5. Cell according to any of the preceding claims having at least one of the following additional features:
a. the weight per unit area of the current collector (110, 115) is reduced by 5% to 80% in the main region (122, 116) by comparison with the weight per unit area of the current collector (110, 115) in the free edge strip (121, 117),
b. the current collector (110, 115) has a hole area in the range of 5% to 80% in the main region (122, 116),
c. the current collector (110, 115) has a tensile strength of 20 N/nm² to 250 N/nm² in the main region.

6. Cell according to any of the preceding claims having the following additional features:
a. the tape-type main region (122) of the anode current collector (110) and tape-type main region (116) of the cathode current collector (115) are both **characterized by** a plurality of the apertures (111),
b. the cell (100) comprises the contact sheet metal member (106) in direct contact with one of the first longitudinal edges (110e), as first contact sheet metal member, and also furthermore comprises a second metallic contact sheet metal member (105) in direct contact with the other of the first longitudinal edges (115e),
c. the second contact sheet metal member (105) is connected to said other longitudinal edge (115e) by welding.

7. Cell according to any of the preceding claims having at least one of the following additional features:
a. the metallic contact sheet metal member (106) connected to the longitudinal edge (110e) of the anode current collector (110) by welding is in contact with the longitudinal edge in such a way that a linear contact zone arises,
b. the metallic contact sheet metal member (105)connected to the longitudinal edge (115e) of the cathode current collector (115) by welding is in contact with the longitudinal edge (115e) in such a way that a linear contact zone arises,
c. the first longitudinal edge (110e, 115e) of the anode current collector (110) and/or of the cathode current collector (115) comprises one or more sections each connected continuously over the entire length thereof to the respective contact sheet metal member (106, 105) by means of a weld seam.

8. Cell according to any of the preceding claims having at least one of the following additional features:
a. the separator (118, 119) is a tape-type substrate made of plastic having a thickness in the range of 5 µm to 50 µm and also having a first and a second longitudinal edge and two end pieces,
b. the longitudinal edges of the separator (118, 119) form the terminal end faces (104a, 104b) of the electrode-separator composite (104),
c. the longitudinal edges (110e, 115e) of the anode current collector (110) and/or of the cathode current collector (115) that emerge from the terminal end faces (104a, 104b) of the winding project from the end faces (104a, 104b) maximally by up to 5000 µm.

## Revendications

1. Cellule à ions lithium (100) présentant les caractéristiques suivantes :
a. la cellule (100) comprend un composite électrode-séparateur (104) en forme de bande comportant la séquence anode (120)/séparateur (118)/cathode (130),
b. l'anode (120) comprend, comme collecteur de courant anodique (110), une feuille métallique en forme de bande ayant une épaisseur dans la gamme allant de 4 um à 30 um et pourvue d'un premier bord longitudinal (110e) et d'un deuxième bord longitudinal et de deux pièces d'extrémité,
c. le collecteur de courant anodique (110) comporte une zone principale (122) en forme de bande qui est chargée d'une couche de matière d'électrode négative (123), et une bande de bord libre (121) qui s'étend le long du premier bord longitudinal (110e) et qui n'est pas chargé de la matière d'électrode (123),
d. la cathode comprend, comme collecteur de courant cathodique (115), une feuille métallique en forme de bande d'une épaisseur comprise entre 4 µm et 30 µm et avec un premier bord longitudinal (115e) et un deuxième bord longitudinal et deux embouts,
e. le collecteur de courant cathodique (115) présente une région principale en forme de bande (116) qui est chargée d'une couche de matière d'électrode positive (125), et une bande de bord libre (117) qui s'étend le long du premier bord longitudinal (115e) et qui n'est pas chargée de la matière d'électrode (125),
f. le composite électrode-séparateur (104) se présente sous la forme d'une bobine pourvue de deux côtés frontaux d'extrémité (104a, 104b),
g. l'anode et la cathode sont conçues et/ou disposées l'une par rapport à l'autre à l'intérieur du composite séparateur-électrode (104) de telle sorte que le premier bord longitudinal (110e) du collecteur de courant anodique (110) sort par l'un des côtés frontaux d'extrémité (104b) et le premier bord longitudinal (115e) du collecteur de courant cathodique (115) sort par l'autre des côtés frontaux d'extrémité (104a),
h. la cellule (100) comprend une partie de tôle de contact métallique (105, 106) qui est en contact direct avec l'un des premiers bords longitudinaux (110e, 115e), et
i. la partie de tôle de contact (105, 106) est reliée à ce bord longitudinal (110e, 115e) par soudage,
ainsi que la caractéristique supplémentaire suivante :
j. la zone principale (122, 116) en forme de bande du collecteur de courant (110, 115) relié par soudage à la partie de tôle de contact (105, 106) comporte un grand nombre de passages (111).

2. Cellule selon la revendication 1 présentant au moins une des caractéristiques supplémentaires suivantes :
a. les passages (111) ménagés dans la zone principale sont des trous ronds ou carrés, notamment des trous emboutis ou percés,
b. le collecteur de courant (110, 115) relié à la partie de tôle de contact (105, 106) par soudage est perforé dans la zone principale (122, 116), notamment par perforation de trous ronds ou de trous oblongs.

3. Cellule selon l'une des revendications précédentes présentant la caractéristique supplémentaire suivante :
a. les passages (111) ménagés dans le collecteur de courant, en particulier dans la zone principale, ont un diamètre moyen dans la gamme allant de 1 um à 2000 µm.

4. Cellule selon la revendication 1 ou selon la revendication 2 présentant au moins une des caractéristiques supplémentaires suivantes :
a. le collecteur de courant (110, 115) relié à la partie de tôle de contact (105, 106) par soudage présente un poids par unité de surface inférieur à celui de la bande de bord libre (121, 117) du même collecteur de courant au moins dans une portion de la zone principale (122, 116),
b. le collecteur de courant (110, 115) relié à la partie de tôle de contact (105, 106) par soudage ne comporte pas de passage ou comporte moins de passages (111) ménagés dans la bande de bord libre (121, 117) par unité de surface que dans la zone principale (122, 116) .

5. Cellule selon l'une des revendications précédentes présentant au moins une des caractéristiques supplémentaires suivantes :
a. le poids par unité de surface du collecteur de courant (110, 115) est réduit de 5 % à 80 % dans la zone principale (122, 116) par rapport au poids par unité de surface du collecteur de courant (110, 115) dans la bande de bord libre (121, 117),
b. le collecteur de courant (110, 115) présente une surface de trou dans la gamme de 5 % à 80 % dans la zone principale (122, 116),
c. le collecteur de courant (110, 115) présente une résistance à la traction de 20 N/mm² à 250 N/mm² dans la zone principale.

6. Cellule après l'une des revendications précédentes présentant les caractéristiques supplémentaires suivantes :
a. la zone principale (122) en forme de bande du collecteur de courant anodique (110) et la zone principale (116) en forme de bande du collecteur de courant anodique (115) sont toutes les deux **caractérisées par** un grand de passages (111),
b. la cellule (100) comprend la partie de tôle de contact (106), qui est en contact direct avec l'un des premiers bords longitudinaux (110e), comme première partie de tôle de contact, et en outre une deuxième partie de tôle de contact métallique (105) qui est en contact direct avec l'autre des premiers bords longitudinaux (115e),
c. la deuxième partie de tôle de contact (105) est reliée à cet autre bord longitudinal (115e) par soudage.

7. Cellule selon l'une des revendications précédentes présentant au moins une des caractéristiques supplémentaires suivantes :
a. la partie de tôle de contact (106), reliée au bord longitudinal (110e) du collecteur de courant anodique (110) par soudage, est en contact avec le bord longitudinal de telle sorte qu'il en résulte une zone de contact en forme de ligne,
b. la partie de tôle de contact (105), reliée au bord longitudinal (115e) du collecteur de courant cathodique (115) par soudage, est en contact avec le bord longitudinal (115e) de telle sorte qu'il en résulte une zone de contact en forme de ligne,
c. le premier bord longitudinal (110e, 115e) du collecteur de courant anodique (110) et/ou du collecteur de courant cathodique (115) comprend une ou plusieurs portions qui sont chacune reliée à la partie de tôle de contact respective (106, 105) sur toute sa longueur de manière continue par un cordon de soudure.

8. Cellule selon l'une des revendications précédentes présentant au moins une des caractéristiques supplémentaires suivantes :
a. le séparateur (118, 119) est un substrat de matière plastique en forme de bande ayant une épaisseur dans la gamme allant de 5 µm à 50 µm et pourvu d'un premier et d'un deuxième bord longitudinal et de deux pièces d'extrémité,
b. les bords longitudinaux du séparateur (118, 119) forment les côtés frontaux d'extrémité (104a, 104b) du composite électrode-séparateur (104),
c. les bords longitudinaux (110e, 115e) du collecteur de courant anodique (110) et/ou du collecteur de courant cathodique (115), qui sortent par les côtés frontaux d'extrémité (104a, 104b) de la bobine, font saillie des côtés frontaux (104a, 104b) jusqu'à un maximum de 5000 µm.
